# EUROPEAN PATENT SPECIFICATION

(11) **EP 1 673 230 B1**
(45) Date of publication and mention of the grant of the patent: **12.12.2007**
(21) Application number: 03818896.7
(22) Date of filing: 09.10.2003
(51) Int. Cl.: B41M 5/26, B41M 5/025, B41M 3/14, B44B 5/00, B42D 15/00

(54) **METHOD FOR THE PRODUCTION OF A STAMPING TOOL TO STAMP SAFETY ELEMENTS IN SURFACES OF CARRIER MATERIALS, AS WELL AS CARRIER MATERIAL WITH AT LEAST ONE SAFETY ELEMENT**
VERFAHREN ZUR HERSTELLUNG EINES PRÄGEWERKZEUGS ZUM EINPRÄGEN VON SICHERHEITSELEMENTEN IN FLÄCHEN VON TRÄGERMATERIALIEN SOWIE TRÄGERMATERIAL MIT MINDESTENS EINEM SICHERHEITSELEMENT
PROCEDE DE FABRICATION D'UN OUTIL A POINçONNER POUR REALISATION DE POINçONS DE SECURITE DANS DES SURFACES DE MATERIAUX SUPPORTS, ET MATERIAU SUPPORT PRESENTANT AU MOINS UN POINçON

(43) Date of publication of application: 28.06.2006
(73) Proprietor: SAUERESSIG GMBH & CO., 48691 Vreden (DE); Starboard Technologies Ltd., 38900 Caesarea (IL)
(72) Inventor: BRÜCKERHOFF, Klemens, 48691 Vreden (DE)
(74) Representative: Tönhardt, Marion
(86) International application number: PCT/EP2003/011153
(87) International publication number: WO 2005/039886

(56) References cited:
- EP-A- 1 127 710
- EP-A- 1 288 719
- EP-A- 1 318 486
- WO-A-01/53113
- DE-A- 19 706 295
- US-A1- 2003 104 308

## Description

The invention refers to a method for producing a stamping tool for the stamping of safety elements in surfaces of carrier materials, as well as carrier material with at least one safety element.

It is customary to furnish securities, banknotes, ID cards, packaging materials, foil, leather, documents, etc. with safety elements, to prevent the non-authorized reproduction of documents or products. By way of example, indicators, special information symbols, or background patterns are applied typographically. For this, all common printing processes, such as offset printing, gravure, flexo printing, recess printing, and copy processes, are used. The safety elements can be made visible either visually or with the help of special selective methods such as ultraviolet light or optical decoders. Such structures are already known from DE 199 00 856 C2. The safety elements described there, however, are exclusively created typographically.

Securities and banknotes are also furnished with a safety element, which is embossed in the paper or is worked into the paper while it is being manufactured. The embossing hinders the copying of securities and can be easily checked by visual means. For stronger stamping, such as blind embossing for e.g. securities, also a tactile check can be performed. These relatively coarse printing patterns, however, are not a very high protection against forgery. Progressive mechanical engineering allows the easy manufacturing of stamping tools.

We know from stamping applications for thermoplastic foil imprints that with laser engraved embossing rollers high refraction structures can be displayed. This effect can be used to make information visible from different perspectives and/or with the help of optical aids.

For conventional stamping tool production processes, multistage manufacturing methods are used. The templates for the embossing patterns are transferred to the drum with the help of reproducing methods such as photography or holography. For this, photosensitive layers are applied to the drums. The exposure then takes place directly via a writing instrument, or via exposure through a transparent film. During the following handling step the drum surface is removed at the exposed parts with etching medium. A further copy method transfers an existing structure, such as a level holographic structure, to the stamping tool via a stamping procedure. For these procedures, usually several manual activities are necessary, which results in high production costs, and sets limits to exact reproducibility. This also applies to mere manual methods such as copper and steel engraving, which, moreover, have long processing times.

DE 197 06 295 A1 describes a printing process, comprising the step of transferring two-dimensional colour printings with the help of a transferring pillow using ink type printing.

EP 1 127 710 A1 discloses a method to transfer an ink image from one medium to a second medium at ambient temperature. Therein a digitized image is selected to be printed on an ink type printer.

EP 1 288 719 A2 and US 2003/0104308 A1 disclose an image forming material, an image formation method and a method for manufacturing a colour proof. This document claims a layered material and a printing process in which a laser has the function to change the chemical properties of the layers contained in the claimed material.

The method described in EP 1 318 486 A1 discloses an apparatus for marking articles. It is mentioned that a common implementation of this invention is the creation of two-dimensional shapes and furthermore that the method may include at least one further printing step which is performed by rollers or cylinders under the use of special inks to enable invisible coding.

The document WO 01/53113 A1 discloses optically variable security devices. This security article comprises different optically active layers, coatings and an optical interference pattern. In this method lasers are used to scribe the diffraction patterns, which comprise a two-dimensional structure.

The objective of this present invention is to present a method of producing a stamping tool for the stamping of safety elements in surfaces of carrier materials, which can be used to create safety elements with a high definition structure that can not be copied using common machine tools.

This objective is solved with a method according to claim 1. Useful arrangements are the subject of the sub claims.

According to the invention, with a method to produce a stamping tool to stamp safety elements on surfaces of carrier materials, it is intended to initially create a three-dimensional digitized template for the safety element, and then to transfer the digital data onto the stamping tool. The template is created with the computer during all handling steps. By this, the template is not subject to an aging process and can be modified any time, even after many years. According to the invention technique, structures can be engraved in ranges of several nanometers. Compared to common methods, such as holography, also large areas can be processed herewith. Via controls, any geometry can be engraved into the structure of the surface. The digital data can be scaled at any discretion, which offers a cost-effective possibility to exactly match the safety element with the requirements. Because of the multitude of modification possibilities due to digital processing, hidden information can only be read out with the proper key.

The authenticity check is done with a special decoder to ensure key-lock technology. The information on the product can not be detected within the safety elements forming the lock. The information can only be made visible with the suitable key. If key and lock are distributed together on the product, a potential forger must also manufacture the key.

After a useful arrangement, the transfer of the digital data takes place on the stamping tool via laser beams, which enables three-dimensional structuring of the stamping tools. Digital processing also allows perfectly seamless transitions. In contrast with this, starting points can hardly be concealed using state-of-the-art processing. Laser processing allows surface structuring with exact geometric structures and sharp edges, which allow high refraction. This makes the safety elements clearly visible. Scanning only results in considerable quality loss. It is therefore not possible to reproduce the safety element. With etching techniques, edges would be rounded off. This invention prevents this disadvantage.

The transfer can be achieved in one single-stage process. By this, the stamping tools can be produced easily and cost-effectively, and the transfer can be integrated into existing processes.

Therefore, the method also includes the possibility to transfer the data for depth-variable illustrating or design stamping to the stamping tool at the same time as the data for the safety element. This can not occur in conventional stamping machines as well as in conventional printing machines in one single step.

The method also includes the possibility to transfer the data for depth-variable illustrating or design stamping to the stamping tool at the same time as the data for the safety element. This can not only occur in conventional stamping machines, but also in conventional printing machines, which means that the design print can be combined with a safety element in stamping technology without any problems and matching properly.

The stamping tool can comprise of a pair of drums, consisting of patrice and matrice.

The stamping tool can be a injection molding tool.

The stamping tool can be an embossing roller.

With the invention, a carrier material is created that has at least one safety element, whereat the safety element contains digitally generated three-dimensional fine structures. The carrier material can be a metallic or a synthetic surface, but it can furthermore also consist of leather and texturized surfaces, which are poorly printable.

With the micro-structured drums of a stamping tool according to the present invention, such surfaces can also be provided with safety elements.

The manufacturing of diffraction grating and diffractive elements, which are used as state-of-the-art keys, require more tools, which are produced mechanically. Laser structuring allows that stamping drums are made available, for example in form of patrice and matrice, for rotative stamping of the keys. Compared with conventional bit-by-bit manufacturing of keys, this results in a considerable economic advantage. Lock and key can be produced at almost the same price for the same amount, just as for commercial products without safety elements.

The characteristics of the invention, which are disclosed in the preceding definition, in the drawing, as well as in the claims, may, individually as well as in any combination, be essential for the realization of the invention.

## Claims

1. A method for the production of a stamping tool to stamp safety elements in surfaces of carrier material, comprising the following steps:
a) Creating a three-dimensional digitized template for the safety element, and
b) Transferring the digital data to the stamping tool via laser beams, which enabler three dimensional structuring of the stamping tool.

2. The method according to claim 1, **characterized by** the transfer being performed in a single-step process.

3. The method according to claim 1, **characterized by** the data for illustrating or design stamping being transferred to the stamping tool at the same time as the data for the safety element.

4. The method according to claim 1, **characterized by** the data for illustrating or design stamping being transferred to the stamping cylinder in a seemless and endless way.

5. The method according to claim 1, **characterized by** the stamping tool being composed of a pair of drums consisting of counter and matrix.

## Patentansprüche

1. Verfahren zum Herstellen eines Prägewerkzeuges zum Prägen von Sicherheitsmerkmalen in Oberflächen von Trägermaterial, mit den folgenden Schritten:
a) Erzeugen einer dreidimensionalen, digitalisierten Vorlage für das Sicherheitselement, und
b) Übertragen der digitalen Daten auf das Prägewerkzeug mittels Laserstrahlen, was das dreidimensionale Strukturieren des Prägewerkzeuges ermöglicht.

2. Verfahren nach Anspruch 1, **dadurch gekennzeichnet, daß** die Übertragung in einem einstufigen Prozeß durchgeführt wird.

3. Verfahren nach Anspruch 1, **dadurch gekennzeichnet, daß** die Daten für eine Bebilderung oder Designprägung gleichzeitig mit den Daten für das Sicherheitselement auf das Prägewerkzeug übertragen werden.

4. Verfahren nach Anspruch 1, **dadurch gekennzeichnet, daß** die Daten für eine Bebilderung oder Designprägung auf den Prägezylinder nahtlos und endlos übertragen werden.

5. Verfahren nach Anspruch 1, **dadurch gekennzeichnet, daß** das Prägewerkzeug ein Walzenpaar, bestehend aus Patrize und Matrize, umfaßt.

## Revendications

1. Procédé de production d'un outil d'estampage destiné à estamper des éléments de sécurité sur des surfaces d'un matériau support, comportant les étapes suivantes consistant à :
a) créer un gabarit numérisé tridimensionnel de l'élément de sécurité, et
b) transférer les données numériques vers l'outil d'estampage via des rayons laser, ce qui permet une structuration tridimensionnelle de l'outil d'estampage.

2. Procédé selon la revendication 1, **caractérisé en ce que** le transfert est effectué lors d'un processus à une seule étape.

3. Procédé selon la revendication 1, **caractérisé en ce que** les données pour une illustration ou l'estampage d'un motif sont transférées vers l'outil d'estampage en même temps que les données pour l'élément de sécurité.

4. Procédé selon la revendication 1, **caractérisé en ce que** les données pour une illustration ou l'estampage d'un motif sont transférées vers le cylindre d'estampage en continu et sans fin.

5. Procédé selon la revendication 1, **caractérisé en ce que** l'outil d'estampage est composé d'une paire de tambours constitués d'une contre-matrice et d'une matrice.
